# NEUE EUROPÄISCHE PATENTSCHRIFT

(11) **EP 3 695 157 B2**
(45) Veröffentlichungstag und Bekanntmachung des Hinweises auf die Entscheidung über den Einspruch: **14.08.2024**
(45) Hinweis auf die Patenterteilung: 08.09.2021
(21) Anmeldenummer: 18786720.5
(22) Anmeldetag: 10.10.2018
(51) Int. Cl.: F16L 55/165, F16L 58/10, F16L 55/163

(54) **VERFAHREN UND ANORDNUNG ZUR SANIERUNG EINER EIN FLÜSSIGES ODER GASFÖRMIGES MEDIUM FÜHRENDEN LEITUNG**
METHOD AND ARRANGEMENT FOR RENOVATING A LINE WHICH CARRIES A LIQUID OR GASEOUS MEDIUM
PROCÉDÉ ET SYSTÈME DE RÉHABILITATION D'UNE CONDUITE ACHEMINANT UN FLUIDE LIQUIDE OU GAZEUX

(30) Priorität: 10.10.2017 DE 102017009436; 01.03.2018 DE 102018001598
(43) Veröffentlichungstag der Anmeldung: 19.08.2020
(73) Patentinhaber: Brandenburger Liner GmbH & Co. KG, 76829 Landau (DE); Olbrich, Norbert, 63694 Limeshain-Himbach (DE)
(72) Erfinder: OLBRICH, Norbert, 63694 Limeshain-Himbach (DE); DUTTENHÖFER, Peter, 76831 Ilbesheim (DE)
(74) Vertreter: Kesselhut, Wolf
(86) Internationale Anmeldenummer: PCT/EP2018/077569
(87) Internationale Veröffentlichungsnummer: WO 2019/072900

(56) Entgegenhaltungen:
- EP-A2- 0 393 304
- EP-A2- 0 393 304
- EP-B1- 2 573 442
- EP-B1- 2 768 655
- WO-A1-00/25057
- WO-A1-00/73692
- DE-U1- 212005 000 056
- US-A1- 2017 082 220
- US-A1- 2017 082 220
- Auftrag vom 01. 10.2014
- Bauzeitenplan vom 06.10.2014
- Sanierungsprotokoll vom 16. 10. 2014 mit ergänzender Eintragung vom 21.10.2014
- Rechnung vom 04.11.2014
- Leitungsplan vom Ort der Arbeiten
- Visitenkarte des involvierten Vertreters des Bauherrn Werksbescheinigung
- Rechnung vom 10.10 2014
- Rechnung vom 07.10.2014

## Beschreibung

Die Erfindung betrifft ein Verfahren und eine Anordnung zur Sanierung einer ein flüssiges oder ein gasförmiges Medium führenden Leitung.

Auf dem Gebiet der grabenlosen Sanierung von defekten Rohrleitungen, wie z.B. defekten Abwasserleitungen oder Abwasserkanälen, werden zunehmend Auskleidungsschläuche eingesetzt, die als "Inliner" bezeichnet werden und aus einem Fasermaterial, insbesondere aus Glasfasergewebe, bestehen, welches mit einem flüssigen Reaktionsharz getränkt ist, das nach dem Einziehen des Auskleidungsschlauchs in die Rohrleitung und Expandieren desselben mit Hilfe von Druckluft durch Licht einer Strahlungsquelle ausgehärtet wird. Ein solcher Auskleidungsschlauch sowie ein Verfahren zur Herstellung eines solchen sind beispielsweise aus der WO-A00/73692 bekannt, wobei der dort beschriebene Auskleidungsschlauch einen Innenfolienschlauch besitzt, auf den die harzgetränkten Faserbänder auf einem Wickeldorn unter Bildung einer Faserlage überlappend aufgewickelt werden, die von einem Außenfolienschlauch umgeben ist.

Bei der Kanalsanierung gibt es außer der Sanierung von drucklosen Freispiegelleitungen auch Abwasserleitungen, die mit Überdruck betrieben werden. Das können Abwasserleitungen sein, die z.B. Flüsse unterqueren, sog. Düker, oder Leitungen, die geländebedingt ansteigen müssen. In der Regel wird das Abwasser hierbei durch Pumpstationen gepumpt.

Zur Sanierung von Trinkwasserrohren können prinzipiell auch Inliner verwendet werden. Allerdings müssen hierbei die besonderen hygienischen Anforderungen des Trinkwassers berücksichtigt werden. Ansonsten sind die technischen Anforderungen aber ähnlich wie bei Abwas ser-Druckrohren.

Die tragende Struktur des Liners muss dem Überdruck standhalten. Bei Abwasserrohren ist das in der Regel ein Druck von weniger als 10 bar, so dass diese Anforderung durch Auskleidungsschläuche, wie sie von den Anmeldern gefertigt werden und beispielsweise in der oben genannten WO-A00/73692 beschrieben sind, problemlos erfüllt werden kann. Höhere Drücke sind bei einer entsprechenden Wanddicke der Auskleidungsschläuche ebenfalls kein Problem.

Freispiegel Abwasserrohre werden gewöhnlich nach DIN 1610 auf Dichtheit geprüft. Dazu wird z.B. ein Liner an den Enden verschlossen und mit Druckluft bei einem Überdruck von 200 mbar geprüft. Bei dieser Druckprobe darf der Druck in 1,5 Minuten lediglich um 15 mbar abfallen. Eine "leichte Undichtheit" ist also erlaubt.

Bei Druckrohren würde diese "leichte Undichtheit" aber sofort zu einer Leckage führen, die nicht zulässig ist. Druckliner müssen daher absolut dicht sein, was zur Folge hat, dass die beispielsweise aus der WO-A00/73692 bekannten Auskleidungsschläuche, bei denen die Innenfolienschläuche nach dem Aushärten des Reaktionsharzes entfernt werden, nicht ohne weiteres zur Sanierung von Druckleitungen, sei es nun Abwasser oder Trinkwasser, eingesetzt werden können.

Durch die speziellen hygienischen Anforderungen sind UV-Liner nicht für die Trinkwassersanierung zulässig, da der Werkstoff, aus welchem die Liner durch Wickeln gefertigt werden, chemische Substanzen enthält, insbesondere UV-Initiatoren, die keine Trinkwasserzulassung besitzen. Diese Substanzen sind nach heutigem Stand der Technik nicht zu substituieren, weshalb die bekannten Liner/Auskleidungsschläuche als solche nicht zur Sanierung von Trinkwasserleitungen geeignet sind.

Demgemäß ist es eine Aufgabe der vorliegenden Erfindung, ein Verfahren und eine Anordnung zu schaffen, mit welchen sich Leitungen, die ein flüssiges oder gasförmiges Medium führen, insbesondere wasserführende Leitungen, in umweltfreundlicher Weise unter Erhalt einer hohen Druckfestigkeit und Dichtheit sanieren lassen.

Diese Aufgabe wird erfindungsgemäß durch ein Verfahren mit den Merkmalen von Anspruch 1 und eine Anordnung mit den Merkmalen von Anspruch 9 gelöst.

Hierbei stellt es einen besonderen Vorteil der Erfindung dar, dass nicht nur Abwasserleitungen und Druckgasleitungen, wie z.B. Erdgasleitungen, sondern auch Trinkwasser führende Druckleitungen mit dem erfindungsgemäßen Verfahren saniert werden können, ohne dass die Gefahr besteht, dass gesundheitsschädliche Substanzen, wie insbesondere Styrol oder auch UV-Initiatoren, die zum Aushärten des in dem Werkstoff enthaltenen Reaktionsharzes erforderlich sind, in den wasserführenden Innenbereich der sanierten Leitung gelangen können.

Ebenso lassen sich unter Anwendung des dem erfindungsgemäßen Verfahren zugrunde liegenden Gedankens auch wasserführende Leitungen wirksam im Nachhinein abdichten, die bereits zuvor mit einem eingangs beschriebenem, z.B. aus der WO-A00/73692 bekannten Auskleidungschlauch aus gewickeltem Fasermaterial ausgekleidet wurden, der jedoch mit Undichtigkeiten behaftet ist.

Gemäß dem der Erfindung zugrunde liegenden Gedanken wird diese Aufgabe dadurch gelöst, dass ein durch Wickeln erzeugter, nicht invertierbarer Standardliner, wie er z.B. in der WO-A00/73692 beschrieben ist und von den Anmeldern bereits seit langem gefertigt wird, die mechanischen Belastungen trägt und ein Coating im Standardliner das System zu 100% abdichtet und gleichzeitig als Sperrschicht dient, so dass die "gefährlichen Substanzen" aus dem Harzmaterial des Standardliners von dem in der Leitung geführten Medium, insbesondere vom Trinkwasser in einer sanierten Trinkwasserleitung, ferngehalten werden.

Hierzu wird der gewickelte Faserbandlagen umfassende Standardliner, der nachfolgend auch als erster Auskleidungsschlauch bezeichnet wird, zunächst in die zu sanierende Leitung, z.B. ein zu sanierendes Abwasserdruckrohr oder eine zu sanierende Trinkwasserleitung, eingezogen, mittels Druckluft expandiert und durch Hindurchziehen einer UV-Strahlungsquelle oder auch durch Heißdampf oder Heißwasser ausgehärtet.

In einem zweiten Verfahrensschritt wird das Coating in den ausgehärteten Standardliner eingebracht. Das Coating, das nachfolgend auch als zweiter Auskleidungsschlauch bezeichnet wird, ist bei der bevorzugten Ausführungsform im Wesentlichen ein Filzschlauch bzw. Filzliner, wie er aus der Kanalsanierung bekannt ist. Dieser Filzliner besteht aus einer ca. 1 mm dicken inneren Kunststoffschicht und einem aufkaschierten Nadelfilz, bevorzugt einem Filz aus Kunst- oder Naturfasern, welches eine demgegenüber geringere Dicke von vorzugsweise 0,1 bis 5 mm, besonders bevorzugt 2 - 3 mm besitzt. Die Kunststoffschicht gewährleistet die Dichtheit des Systems und dient zusätzlich auch als Sperrschicht, um den Standardliner mit den darin enthaltenen "gefährlichen Substanzen" im Falle einer Trinkwasserleitung vom Trinkwasser abzuschotten.

Gemäß der Erfindung wird das Filz mit einem flüssigen Reaktionsharz, bevorzugt einem EP-Harz, d.h. einem Epoxidharz, imprägniert, welches als Haftvermittler zwischen der Kunststoffschicht mit der aufkaschierten Vlieslage und der Innenfläche des Standardliners dient. Als Reaktionsharz kann auch ein UP oder ein sonstiges gut klebendes flüssiges Kunstharz verwendet werden. Die Innenfläche des ersten Auskleidungsschlauchs wird dabei durch die innerste Lage aus gehärtetem Glasfasermaterial bereitgestellt, welches vorzugsweise ein Laminat aus überlappend gewickelten Glasfasern und einem UP-Harz ist. Der für den Wickelvorgang und das Expandieren des ersten Auskleidungsschlauchs in der Regel erforderliche Innenfolienschlauch wird, sofern vorhanden, vor dem Einziehen des zweiten Auskleidungsschlauchs aus dem ersten Auskleidungsschlauch entfernt, so dass das flüssige Reaktionsharz, d.h. bevorzugt das Epoxidharz, unmittelbar mit dem Laminat in Kontakt ist.

Das Imprägnieren mit dem Reaktionsharz kann in bekannter Weise z.B. in einem Walzenspalt unmittelbar vor dem Einstülpen des zweiten Auskleidungsschlauchs erfolgen, durch welchen der zweite Auskleidungsschlauch vor dem Einstülpen mit innenliegender Vlieslage und einem darin aufgenommenen Vorrat an Reaktionsharz hindurch gezogen wird.

Selbstverständlich kann das Imprägnieren/Tränken des zweiten Auskleidungsschlauchs auch durch ein direktes Auftragen des Reaktionsharz, z.B. mittels Auftragswalzen, auf die außenliegende Vliesschicht des von innen nach außen gestülpten zweiten Auskleidungsschlauchs erfolgen, bevor dieser in die zum Einstülpen erforderliche Einstülp-Konfiguration invertiert wird, in der die getränkte Vlieslage sich auf der Innenseite des zweiten Auskleidungsschlauchs befindet, und die Folienlage, die im fertigen Schlauch die Innenfolienlage bildet auf der Außenseite desselben liegt.

Das Coating, d.h. der mit dem Reaktionsharz/EP-Harz imprägnierte zweite Auskleidungsschlauch, wird dann in den vorher ausgehärteten ersten Auskleidungsschlauch nach dem von Filzlinern her bekannten Verfahren fortlaufend eingestülpt und danach insbesondere mit Wärme und/oder auch UV-Licht ausgehärtet. Gleichzeitig oder alternativ kann die Aushärtung durch IR-Licht einer Infrarotstrahlungsquelle beschleunigt werden oder gar ausschließlich durch IR-Licht oder eine Kombination aus IR- und UV-Licht erfolgen. Das Einstülpen von Filzlinern, das auch als Invertieren oder Inversion bezeichnet wird, ist beispielsweise in der EP 2 573 442 B1 sowie auch der DE 212 005 000 056 U1 beschrieben.

Im Prinzip handelt es sich bei dem erfindungsgemäßen Verfahren um zwei bekannte Sanierungsverfahren, die zu einem neuen Verfahren kombiniert werden, das die Nachteile der einzelnen Verfahren, wie insbesondere die fehlende Trinkwasserzulassung und verringerte Druckdichtigkeit der gewickelten Auskleidungsschläuche und die reduzierte Festigkeit der invertierbaren/einstülpbaren Filzliner überkommt. Das Verfahren führt dadurch in der Praxis zu einer Reihe von Vorteilen, die darin zu sehen sind, dass die seit langem bekannten gewickelten Auskleidungsschläuche trotz der darin enthaltenen toxischen Substanzen nunmehr erstmalig auch zur Sanierung von Trinkwasserleitungen einsetzbar sind, um dort die erforderliche Festigkeit bereit zu stellen und Trinkwasser-Druckleitungen, wie insbesondere Stahlleitungen, die zuvor aufgrund der mangelnden Festigkeit der invertierbaren Filzliner mit diesen allein ebenfalls nicht abgedichtet werden konnten, mit der erfindungsgemäßen Kombinationslösung nunmehr in kostengünstiger Weise "grabenlos" saniert werden können.

Die Erfindung wird nachfolgend mit Bezug auf die Zeichnungen anhand bevorzugter Ausführungsformen der Erfindung beschrieben.

In den Zeichnungen zeigen
- Fig. 1a: eine schematische Darstellung des Einziehens eines ersten Auskleidungsschlauchs aus gewickelten Faserbändern in einen zu sanierenden Kanal,
- Fig. 1b: eine schematische Darstellung des Kanals nach dem Einziehen und Expandieren des ersten Auskleidungsschlauchs während der Aushärtung des Reaktionsharzes durch eine schematisch angedeutete Strahlungsquelle,
- Fig. 1c: den Auskleidungsschlauch von Fig. 1a und 1b beim Herausziehen eines schematisch angedeuteten Innenfolienschlauchs aus dem ausgehärteten ersten Auskleidungsschlauch,
- Fig. 1d: den fertig ausgehärteten ersten Auskleidungsschlauch vor dem Einziehen des zweiten Auskleidungsschlauchs,
- Fig. 2a: eine schematische Darstellung des Kanals von Fig. 1d während des Einstülpens des zweiten Auskleidungsschlauchs in den ersten Auskleidungsschlauch,
- Fig. 2b: den fertig sanierten Kanal nach dem vollständigen Einstülpen und Aushärten des zweiten Auskleidungsschlauchs, und
- Fig. 3: eine vergrößerte ausschnittsweise Schnittdarstellung der Kanalwand mit dem eingezogenen und ausgehärteten ersten und zweiten Auskleidungsschlauch.

Wie in den Figuren Ia - 2b gezeigt ist, wird bei dem erfindungsgemäßen Verfahren zur Sanierung einer wasserführenden Leitung 1, bei der es sich insbesondere um eine Trinkwasserleitung oder eine Abwasserdruckleitung handelt, ein bekannter, aus überlappend gewickelten Faserbändern 2 gefertigter erster Auskleidungsschlauch 10, wie er insbesondere aus der WO-A00/73692 bekannt ist, im nicht expandierten Zustand in den zu sanierenden Kanal, bzw. in die Leitung 1 eingezogen. Im Anschluss daran wird das zu sanierende Teilstück der Leitung 1 durch schematisch angedeutete Packer 4 an den Enden verschlossen und mittels einer Druckluftquelle 8 expandiert, sodass sich der erste Auskleidungsschlauch 10 an die Innenwand der zu sanierenden Leitung 1 anlegt.

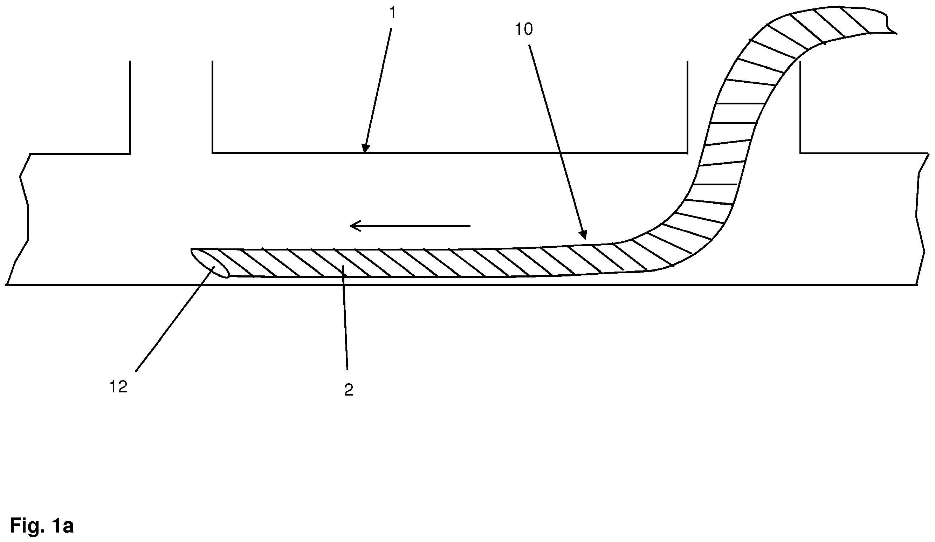

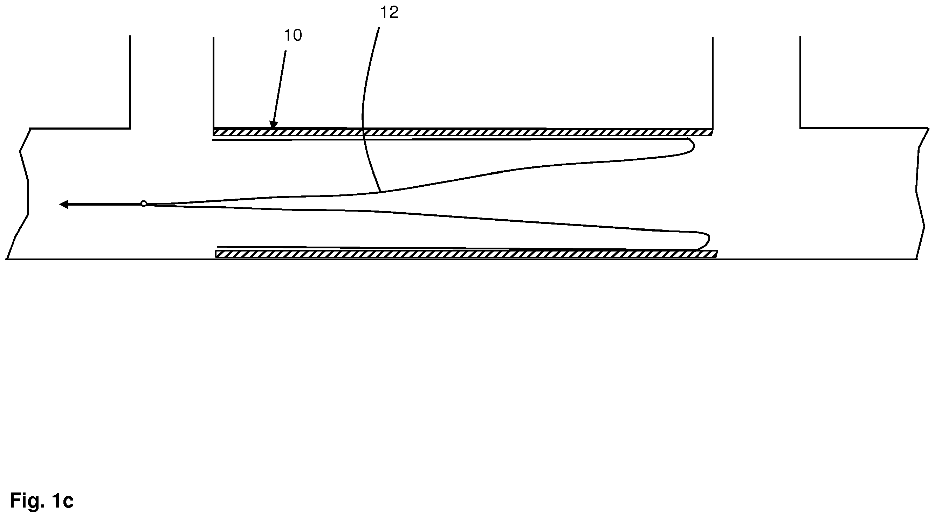

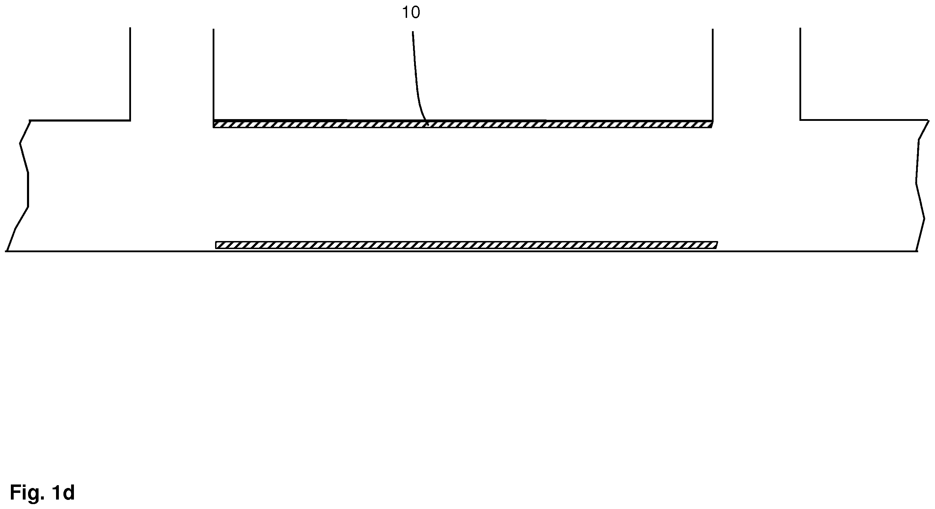

Die Faserbänder 2, die insbesondere auf einen für UV-Licht durchlässigen inneren Folienschlauch 12 aufgewickelt sind, der in Figur 1c angedeutet ist, sind mit einem Fotoinitiatoren enthaltenden Reaktionsharz getränkt, welches durch das Licht einer Strahlungsquelle 6 ausgehärtet werden kann, die hierzu durch den expandierten ersten Auskleidungsschlauch hindurch gezogen wird.

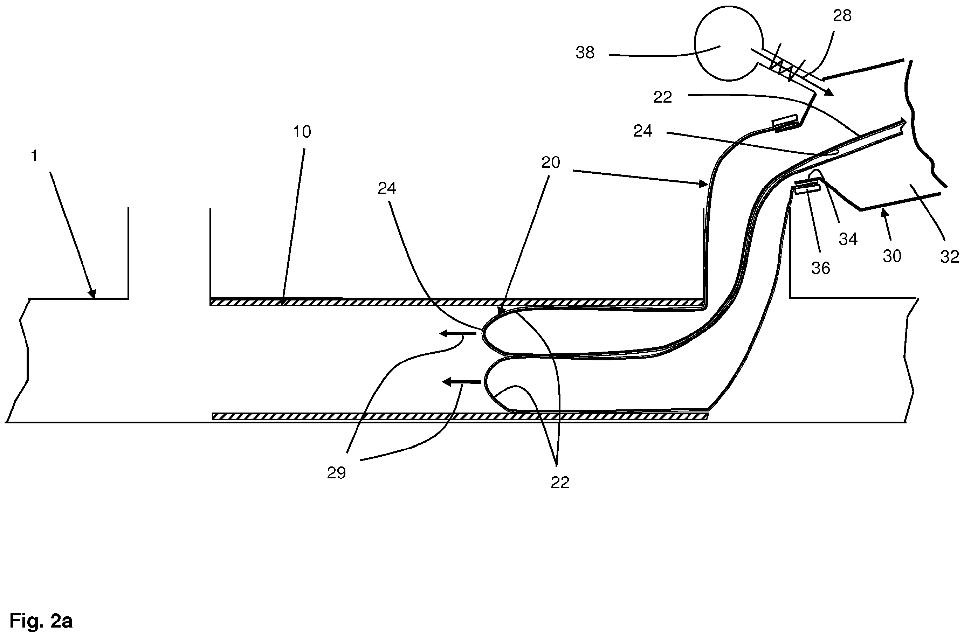

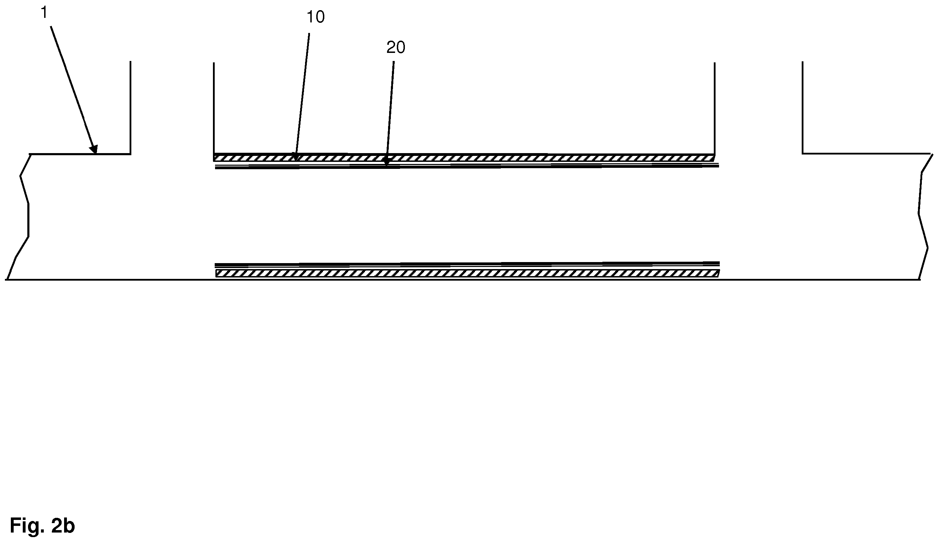

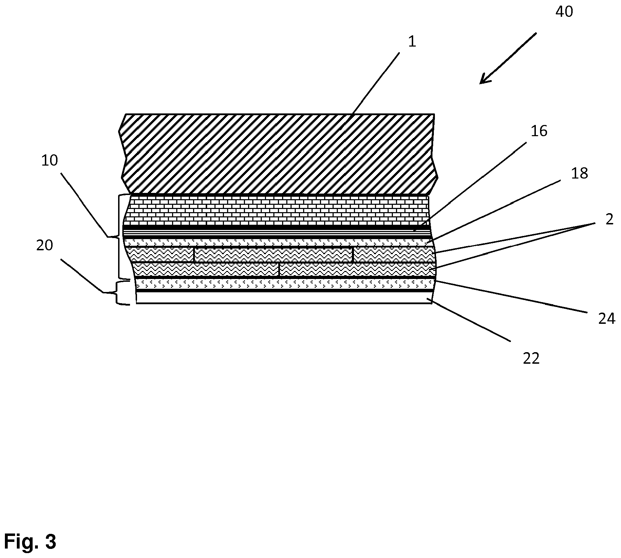

Nachdem das Reaktionsharz in den Faserbändern 2 durch das UV-Licht der Strahlungsquelle 6 vollständig ausgehärtet wurde, werden die Packer 4 entfernt und der innere Folienschlauch 12, der mitunter auch als Innenfolienschlauch bezeichnet wird, aus dem ersten Auskleidungsschlauch 10 entfernt, wie dies in Figur 1c schematisch angedeutet ist. In den nunmehr vollständig ausgehärteten ersten Auskleidungsschlauch 10, der wenigstens eine, vorzugsweise jedoch drei, vier oder gar mehr Lagen aus fortlaufend übereinander gewickelten ausgehärteten Faserbändern 2 enthält, von denen die äußerste, radial außenliegende Lage zusätzlich von einem Außenfolienschlauch 16 mit einer auf der Innenseite aufkaschierten Vliesschicht 18 umgeben sein kann, wie dies in Figur 3 angedeutet ist, wird im Anschluss daran ein zweiter Auskleidungsschlauch 20 eingestülpt, wie dies in Figur 2a angedeutet ist.

Der zweite Auskleidungsschlauch 20 umfasst hierzu eine umlaufend geschlossene Innenfolienlage 22, auf die eine Vlieslage 24, beispielsweise ein Polyestervlies oder ein Glasvlies mit einer Dicke von beispielsweise 1 mm oder auch mehr, aufkaschiert ist, d.h. über ein bekanntes Schmelzverfahren, insbesondere durch Anschmelzen des Kunststoffmaterials, aus welchem die Innenfolienlage 22 geformt ist, aufgebracht wird. Die Innenfolienlage 22 des zweiten Auskleidungsschlauchs 20 ist vorzugsweise eine nahtlose oder überlappend verklebte PE-Folie und/oder eine nahtlose oder überlappend verklebte PU-Folie und/oder eine nahtlose oder überlappend verklebte PA-Folie oder eine Verbundfolie aus PE/PA. Die Innenfolie der Innenfolienlage weist bevorzugt eine Wandstärke von mehr als 1 mm auf, wobei PE den Kunststoff Polyethylen und PA den Kunststoff Polyamid bezeichnet.

Weiterhin kann das Vlies auch ein PE-Vlies und/oder ein PP-Vlies und/oder ein Pan-Vlies sein, wobei PP den Kunststoff Polypropylen und Pan den Kunststoff Polyacrylnitril bezeichnet.

Wie in den Figuren nicht dargestellt ist, wird der zweite Auskleidungsschlauch 20, der in gleicher Weise wie der innere Folienschlauch 12 des ersten Auskleidungsschlauchs 10 eine Längsnaht aufweisen kann, an der die überlappenden Längsränder der inneren Folienlagen beispielsweise durch Verschweißen oder Verkleben miteinander verbunden sind, zunächst mit einem weiteren Reaktionsharz, bevorzugt Epoxidharz, befüllt, um die Vlieslage 24 mit dem weiteren Reaktionsharz zu tränken. Obgleich das weitere Harz auch ein anderes flüssiges Reaktionsharz, wie insbesondere ein UV-Initiatoren enthaltendes Polyurethan Harz (PU-Harz) sein kann, wird als solches bevorzugt Epoxidharz (EP-Harz) eingesetzt, ohne dass die Erfindung hierauf beschränkt ist.

Zum Tränken der Vlieslage 24 kann der zweite Auskleidungsschlauch 20 mit der auf der Außenseite angeordneten inneren Folienlage 22 mit einer entsprechenden Menge an flüssigem weiterem Reaktionsharz befüllt werden, welches in bekannter Weise aus Binder- und Härterkomponenten besteht und unmittelbar vor dem Einfüllen des Harzes in den Innenraum des zweiten Auskleidungsschlauchs 20 vor Ort, d.h. z.B. auf der Baustelle gemischt wird. Um hierbei das weitere Reaktionsharz in das Vliesmaterial der Vlieslage 24 hinein zu pressen und dadurch eine gleichmäßige Benetzung der Vlieslage 24 mit dem weiteren Reaktionsharz sicherzustellen, wird der zweite Auskleidungsschlauch 20 beispielsweise durch einen nicht näher dargestellten Walzenspalt bewegt, der zwischen einer ersten Kalibrierwalze und einer zweiten Kalibrierwalze gebildet ist.

Das Einziehen des in der zuvor beschriebenen Weise vorbereiteten zweiten Auskleidungsschlauchs 20 kann beispielsweise mittels einer in Figur 2a lediglich schematisch angedeuteten Inversionseinrichtung 30 erfolgen. Diese kann einen Trommelkörper 32 aufweisen, welcher eine stutzenartige Auslassöffnung 34 besitzt, durch die hindurch ein erstes Ende des mit Epoxidharz getränkten zweiten Auskleidungsschlauchs 10 hindurch geführt und nach dem Umschlagen des ersten Endes von innen nach außen auf der Außenseite der stutzenartigen Auslassöffnung 34 beispielsweise mittels einer Schelle 36 dichtend befestigt wird.

Im Anschluss daran wird der Innenraum des Trommelkörpers 32, in welchem der zweite Auskleidungsschlauch 20 beispielsweise auf einer nicht näher gezeigten Trommel aufgewickelt vorgehalten wird, mit Druckluft beaufschlagt, welche über eine in Figur 2a schematisch angedeutete Druckluftquelle 38 bereitgestellt wird. Durch die auf der Innenseite, d.h. der Seite, auf der sich die Folienlagen 22 des umgekrempelten zweiten Auskleidungsschlauchs 20 befinden, wirkende Druckluft wird der zweite Auskleidungsschlauch 20 dann sukzessive fortlaufend in Richtung der beiden Pfeile 29 in den ausgehärteten ersten Auskleidungsschlauch 10 eingetrieben, wie dies in Figur 2a schematisch angedeutet ist.

Nachdem der gesamte zu sanierende Leitungsabschnitt von dem zweiten Auskleidungsschlauch 20 ausgefüllt ist, kann der Innenraum des zweiten Auskleidungsschlauchs zur Beschleunigung der Aushärtung des weiteren Reaktionsharzes mit einem Heißgas beaufschlagt werden, welches beispielsweise durch Erhitzen der Druckluft der Druckluftquelle 38 bereitgestellt werden kann. Alternativ kann anstelle einer Druckluftquelle 38 auch Wasser eingesetzt werden, um den zweiten Auskleidungsschlauch 20 in den ersten Auskleidungsschlauch 10 hinein einzustülpen. Zum Aushärten kann in diesem Falle auch Heißwasser oder Heißdampf verwendet werden, welcher/welches durch den eingestülpten zweiten Auskleidungsschlauch hindurch zirkuliert wird. Durch die Zufuhr von Wärme wird hierbei die Aushärtung des weiteren Reaktionsharzes erheblich beschleunigt und die Zeitdauer zur Sanierung der zu sanierenden Leitung 1 insgesamt in vorteilhafter Weise verkürzt.

Nachdem der zweite Auskleidungsschlauch 20 ausgehärtet wurde, werden die überlappenden Teile des ausgehärteten Vliesmaterials der Vlieslage 24 beispielsweise mit einem Fräsroboter entfernt, sodass die wasserführende Leitung 1 durch den ersten Auskleidungsschlauch 10 und den darin eingezogenen zweiten Auskleidungsschlauch 20 vollständig abgedichtet ist. Aufgrund der guten Anhaftung der inneren Vlieslage 24 des zweiten Auskleidungsschlauchs 20 an der dem Zentrum der Leitung 1 zugewandten Innenlage des ersten Auskleidungsschlauchs 10 aus hochfestem Glasfaserlaminat wird hierbei eine vollständige Abdichtung des ansonsten nicht vollständig druckdichten Glasfaserlaminats des ersten Auskleidungsschlauchs 10 erhalten, die sicherstellt, dass aus dem Glasfaserlaminat des ersten Auskleidungsschlauchs 10 kein Styrol oder giftige Fotoinitiatoren in den Innenraum der wasserführenden Leitung 1 gelangen können und dort das Wasser verunreinigen.

Wie in diesem Zusammenhang von den Anmeldern weiter gefunden wurde, ist es hierbei unerheblich, ob die innere Folienlage 24 im Bereich einer Längsnaht einen Überlappungsbereich aufweist oder nicht, da die Anbindung durch das weitere Reaktionsharz und die Vlieslage 24,insbesondere beim Einsatz von Epoxidharz, ein Ablösen der inneren Folienlage 24 in diesem Bereich zuverlässig ausschließt. Hierdurch wird im Falle einer wasserführenden Leitung eine extrem hohe Spülfestigkeit der sanierten Leitung 1 erhalten, die eine sehr hohe Lebensdauer derselben garantiert.

Obgleich die Aushärtung des ersten Auskleidungsschlauchs 10 grundsätzlich auch durch den Einsatz eines Peroxide enthaltenden Reaktionsharzes unter Einsatz von Heißdampf oder Heißwasser erfolgen kann, wird der erste Auskleidungsschlauch, wie zuvor beschrieben, bevorzugt durch UV-Licht ausgehärtet, wodurch sich gegenüber dem Einsatz von Peroxiden und Heißdampf der Vorteil einer deutlich verkürzten Aushärtezeit und eines erheblich verringerten Vorrichtungsaufwands ergibt.

Um die Aushärtezeit weiter zu verringern, kann eine Strahlungsquelle 6 eingesetzt werden, die eine Vielzahl von UV-Dampflampen oder auch von UV-Licht emittierenden LEDs besitzt, die vorzugsweise in mehreren Modulen aufgenommen sind, die beweglich in Form einer in den Zeichnungen nicht näher gezeigten Kette durch die Leitung 1 hindurchgezogen werden.

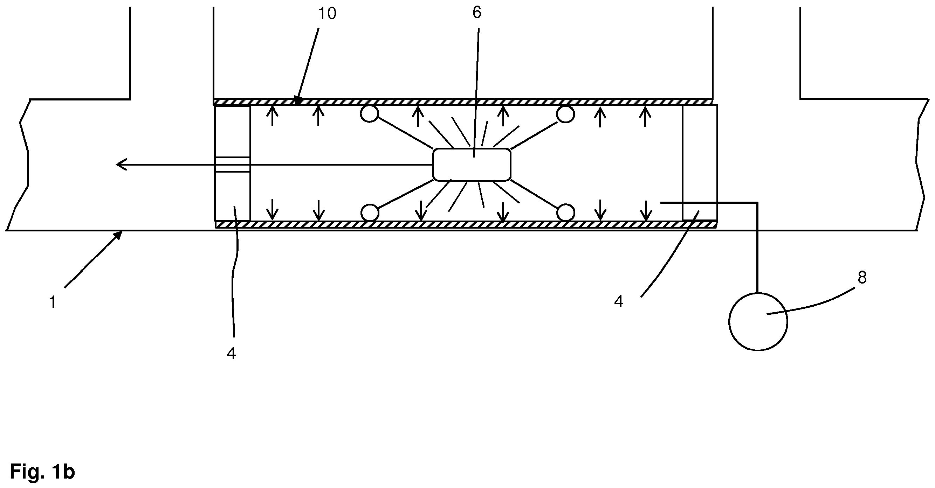

Das weitere Reaktionsharz ist, wie bereits zuvor erwähnt, vorzugsweise ein bekanntes selbsthärtendes Epoxidharz oder auch ein Polyurethanharz, welches durch Vermischen von zwei Komponenten bereitgestellt wird, und dessen Aushärtung durch die Zufuhr von Wärme beschleunigt wird. Alternativ zu der zuvor erwähnten Zufuhr von Heißgas, welches durch Erhitzen der von der Druckluftquelle 38 bereitgestellten Druckluft in den Innenraum des zweiten Auskleidungsschlauchs 20 eingebracht wird, kann es weiterhin vorgesehen sein, dass der Innenraum des zweiten Auskleidungsschlauchs 20, nachdem dieser in den ersten Auskleidungsschlauch 10 hinein eingestülpt wurde, durch eine Infrarotstrahlungsquelle, beispielsweise durch eine Infrarotlampe, von innen her bestrahlt wird, welche ähnlich der in Figur 1b gezeigten Strahlungsquelle 6 durch den zweiten Auskleidungsschlauch 20 hindurchgezogen wird.

Alternativ kann das weitere Reaktionsharz auch ein durch UV-Licht härtbares flüssiges Reaktionsharz, insbesondere Epoxidharz sein, welches beispielsweise dadurch ausgehärtet wird, dass die Enden des zweiten Auskleidungsschlauchs 20 durch Packer 4 verschlossen, der Innenraum des zweiten Auskleidungsschlauchs 20 mit Druckluft beaufschlagt und die UV-Lichtquelle 6, wie in Figur 1b gezeigt, in gleicher Weise wie beim ersten Auskleidungsschlauch 10 durch den Innenraum des in diesem Falle zweiten Auskleidungsschlauchs 20 hindurchgezogen wird. Hierdurch ergibt sich der Vorteil, dass zum einen dieselben Packer und dieselbe Strahlungsquelle 6 eingesetzt werden können, und zum anderen in vorteilhafter Weise das Vermischen des weiteren Reaktionsharzes unmittelbar vor dem Einstülpen des zweiten Auskleidungsschlauchs 20 auf der Baustelle entfallen kann. Hierzu wird der zweite Auskleidungsschlauch 20 bereits zuvor bei der Herstellung mit dem UV-härtenden weiteren Reaktionsharz getränkt und in einem für UV-Licht undurchlässigen Behältnis zur Baustelle transportiert. Durch diese Maßnahme ergibt sich der weitere Vorteil, dass nicht nur der Zeitpunkt, zu welchem die Aushärtung des zweiten Auskleidungsschlauchs 20 vorgenommen werden soll, frei wählbar ist, sondern dass durch den Einsatz derselben UV-Lichtquelle und der vergleichsweise dünnwandigen Innenfolienlage 24 des zweiten Auskleidungsschlauchs 20 eine Aushärtung des weiteren Reaktionsharzes in kürzester Zeit erfolgen kann.

Anders ausgedrückt lässt sich dadurch, dass sowohl der erste Auskleidungsschlauch 10, als auch der zweite Auskleidungsschlauch 20 ein durch UV-Licht härtbares Reaktionsharz enthalten, bevorzugt ein UP-Harz im Falle des ersten Auskleidungsschlauchs 10 und ein lichthärtbares Epoxidharz oder auch PU-Harz im Falle des zweiten Auskleidungsschlauchs 20, mittels ein und derselben Strahlungsquelle in zeitlich hochflexibler Weise und in kürzester Zeit eine Aushärtung der beiden Auskleidungsschläuche 10, 20 vornehmen, bei der der jeweilige Aushärtevorgang beispielsweise zur Sicherstellung einer hohen Qualität des Endprodukts durch entsprechende Sensoren überwacht werden kann.

Nach einem weiteren der Erfindung zugrunde liegenden Gedanken ist der erste Auskleidungsschlauch 10 ein in einer wasserführenden Leitung 1 angeordneter, für das Wasser an wenigstens einer Stelle durchlässiger Altschlauch, der vor dem Einstülpen des zweiten Auskleidungsschlauchs 20 an seiner inneren Umfangsfläche gereinigt und getrocknet wird, um eine gute Anhaftung der inneren Vlieslage 24 durch das weitere Reaktionsharz sicherzustellen. Bei dem durchlässigen Altschlauch handelt es sich um den gewickelten ersten Auskleidungsschlauch 10, bei welchem der innere Folienschlauch 12 eine lokale Perforation aufweist, sodass beim Expandieren des ersten Auskleidungsschlauchs 10 mittels Druckluft die Druckluft durch diese perforierte Stelle sowie das darunterliegende Laminat hindurch ausströmt und das flüssige Reaktionsharz aus dem Laminat herausgeblasen wird. Nach dem Aushärten entsteht an dieser Stelle eine Undichtigkeit, durch die das in der Leitung 1 geführte Wasser austreten kann. In diesem Falle eröffnet sich mit dem erfindungsgemäßen Verfahren die Möglichkeit, dass die undichte Stelle durch das Einstülpen des zweiten Auskleidungsschlauchs 20 vollständig abgedichtet wird, und zudem das weitere Reaktionsharz in der Vlieslage 24 in die im Laminat des ersten Auskleidungsschlauchs 10 gebildeten Öffnungen im Bereich der undichten Stelle eindringt und diese verschließt. Hierdurch wird nicht nur die undichte Stelle abgedichtet, sondern in vorteilhafter Weise auch die mechanische Festigkeit des Laminats des ersten Auskleidungsschlauchs 10 in diesem Bereich nach dem Aushärten des weiteren Reaktionsharzes nahezu vollständig hergestellt, so dass der gesamte Auskleidungsschlauch selbst bei einer Druckleitung die geforderten mechanischen Festigkeitsanforderungen erfüllt. Das zuvor beschriebene Verfahren gilt entsprechend auch für zu sanierende Druckleitungen für flüssige oder auch gasförmige Medien, wie z.B. Öl- und Gaspipelines oder auch Leitungen in Industrieanlagen etc.

Figur 3 zeigt eine schematische ausschnittsweise Darstellung einer in der zuvor beschriebenen Weise geformten erfindungsgemäßen Anordnung 40 aus gehärtetem ersten Auskleidungsschlauch 10 und eingesetztem ausgehärtetem zweiten Auskleidungsschlauch 20 mit den jeweiligen Lagen. Wie hierbei zu erkennen ist, weist die Anordnung keinen inneren Folienschlauch 12 auf, welcher lediglich zum Einziehen, Expandieren und Aushärten des ersten Auskleidungsschlauchs 10 benötigt wird und gemäß der Darstellung von Fig. 1c vor dem Einbringen des zweiten Auskleidungsschlauchs 20 entfernt wird.

### Liste der Bezugszeichen

- 1: zu sanierende Leitung
- 2: Faserbänder
- 4: Packer
- 6: Strahlungsquelle
- 8: Druckluftquelle
- 10: erster Auskleidungsschlauch
- 12: innerer Folienschlauch
- 16: Außenfolienschlauch
- 18: Vliesschicht
- 20: zweiter Auskleidungsschlauch
- 22: Innenfolienlage
- 24: Vlieslage
- 26: Wärmequelle
- 28: Heißgas
- 29: Pfeile für Triebrichtung des zweiten Auskleidungsschlauchs
- 30: Inversionseinrichtung
- 32: Trommelkörper
- 34: stutzenartige Auslassöffnung
- 36: Schelle
- 38: Druckluftquelle
- 40: Anordnung

## Patentansprüche

1. Verfahren zur Sanierung einer ein flüssiges oder gasförmiges Medium führenden Leitung (1), bei dem ein aus überlappend gewickelten, mit einem härtbaren flüssigen Reaktionsharz getränkten Faserbändern (2) geformter erster Auskleidungsschlauch (10) in die Leitung (1) eingezogen, der Auskleidungsschlauch (10) durch Einleiten von Druckluft expandiert und das Reaktionsharz ausgehärtet wird,
**dadurch gekennzeichnet, dass**
nach dem Aushärten des Reaktionsharzes ein zweiter Auskleidungsschlauch (20) durch Einstülpen in den ausgehärteten ersten Auskleidungsschlauch (10) hinein eingebracht wird, welcher zweite Auskleidungsschlauch (20) eine umlaufend geschlossene Innenfolienlage (22) und eine auf diese aufkaschierte Vlieslage (24) umfasst, welche mit einem weiteren flüssigen Reaktionsharz getränkt ist, wobei der zweite Auskleidungsschlauch (20) expandiert und das weitere Reaktionsharz ausgehärtet wird.

2. Verfahren nach Anspruch 1,
**dadurch gekennzeichnet, dass**
der erste Auskleidungsschlauch (10) einen für UV-Licht durchlässigen inneren Folienschlauch (12) umfasst, auf welchen die harzgetränkten Faserbänder (2) aufgewickelt sind, das flüssige Reaktionsharz ein durch Einstrahlen von Licht härtbares Reaktionsharz ist, und dass das Aushärten des ersten Auskleidungsschlauchs (10) durch Hindurchführen einer Strahlungsquelle (6) erfolgt.

3. Verfahren nach Anspruch 2,
**dadurch gekennzeichnet, dass**
das lichthärtende Reaktionsharz Fotoinitiatoren enthält, die durch UV-Licht aktivierbar sind, und dass die Strahlungsquelle (6) eine UV-Strahlungsquelle, insbesondere eine UV-Dampflampen enthaltende Strahlungsquelle oder eine UV-Licht emittierende LEDs aufweisende Strahlungsquelle ist.

4. Verfahren nach einem der vorhergehenden Ansprüche,
**dadurch gekennzeichnet, dass**
das weitere Reaktionsharz ein durch Wärme härtbares Reaktionsharz, vorzugsweise ein durch Wärme härtbares Epoxidharz ist, welches vor dem Einstülpen des zweiten Auskleidungsschlauchs (20) in den ersten Auskleidungsschlauch (10) auf die Vlieslage (24) aufgebracht wird.

5. Verfahren nach Anspruch 4,
**dadurch gekennzeichnet, dass**
das Aushärten des weiteren Reaktionsharzes durch Einführen einer Wärmequelle, insbesondere einer Infrarotstrahlung emittierenden Lichtquelle, oder durch Einleiten von Heißgas (28) oder einer erwärmten Flüssigkeit in den expandierten zweiten Auskleidungsschlauch (20) erfolgt und/oder beschleunigt wird.

6. Verfahren nach einem der Ansprüche 1 bis 3,
**dadurch gekennzeichnet, dass**
das weitere Reaktionsharz ein durch UV-Licht härtbares Reaktionsharz, bevorzugt ein durch UV-Licht härtbares Epoxidharz ist, welches vor dem Einstülpen des zweiten Auskleidungsschlauchs (20) in den ersten Auskleidungsschlauch (10) auf die Vlieslage (24) aufgebracht wird.

7. Verfahren nach einem der vorhergehenden Ansprüche,
**dadurch gekennzeichnet, dass**
der erste Auskleidungsschlauch (10) einen inneren Folienschlauch (12) aufweist, auf welchen die harzgetränkten Faserbänder (2) überlappend aufgewickelt sind, und dass der innere Folienschlauch (12) nach dem Aushärten des ersten Auskleidungsschlauchs (10) aus dem ersten Auskleidungsschlauch (10) entfernt wird.

8. Verfahren nach Anspruch 7,
**dadurch gekennzeichnet, dass**
der erste Auskleidungsschlauch (10) ein in der Leitung (1) angeordneter, für das Medium an wenigstens einer Stelle durchlässiger Altschlauch ist, der aus überlappend gewickelten, mit einem härtbaren flüssigen reaktionsharz getränkten Faserbändern (2) geformt ist, und der durch Einleiten von Druckluft expandiert und dessen Reaktionsharz ausgehärtet ist, und dass der Altschlauch vor dem Einziehen des zweiten Auskleidungsschlauchs (20) an seiner inneren Umfangsfläche gereinigt und getrocknet wird, und dass der zweite Auskleidungsschlauch (20) in den gereinigten und getrockneten Altschlauch hinein eingestülpt und in diesem zur Abdichtung der undichten Stelle ausgehärtet wird.

9. Anordnung umfassend eine zu sanierende Leitung, sowie einen aus überlappend gewickelten, mit einem Reaktionsharz getränkten Faserbändern (2) geformten, in die zu sanierende Leitung eingezogenen, in dieser mittels Druckluft expandierten und durch Einbringen von Wärme oder Licht ausgehärteten ersten Auskleidungsschlauch (10), sowie einen in den ausgehärteten ersten Auskleidungsschlauch (10) hinein eingestülpten zweiten Auskleidungsschlauch (20), der einen umlaufend geschlossenen Innenfolienschlauch mit einer inneren Folienlage (22) und einer darauf aufkaschierten, mit einem weiteren ausgehärteten Reaktionsharz getränkten Vlieslage aufweist.

10. Anordnung nach Anspruch 9,
**dadurch gekennzeichnet, dass**
die auf die innere Folienlage (22) des zweiten Auskleidungsschlauchs aufkaschierte Vlieslage (24) ein Polyestervlies und/oder Glasvlies und/oder ein PE-Vlies und/oder ein PP-Vlies und/oder ein Pan-Vlies ist, oder ein solches enthält.

11. Anordnung nach Anspruch 9 oder 10,
**dadurch gekennzeichnet, dass**
die innere Folienlage des zweiten Auskleidungsschlauchs eine nahtlose oder überlappend verklebte PE-Folie und/oder eine nahtlose PU-Folie und/oder eine nahtlose PA-Folie oder eine Verbundfolie aus PE/PA ist, die bevorzugt eine Wandstärke von mehr als 1 mm aufweist.

12. Leitung, insbesondere Druckleitung, enthaltend eine Anordnung nach einem der Ansprüche 1 bis 11,
**dadurch gekennzeichnet, dass**
das Reaktionsharz in den Faserbändern (2) des ersten Auskleidungsschlauchs (10) und das weitere Reaktionsharz in der Vlieslage (24) ausgehärtet sind.

## Claims

1. Method for renovating a line (1) conducting a liquid or gaseous medium, where a first flexible lining tube (10) formed from overlap-wound fibre tapes (2) saturated with a curable liquid reactive resin are drawn into the line (1), the flexible lining tube (10) is expanded by introducing compressed air and the reactive resin is hardened,
**characterized in that**
after the hardening of the reactive resin a second flexible lining tube (20) is introduced by inversion-insertion into the hardened first flexible lining tube (10), the said second flexible lining tube (20) comprising a circumferentially continuous internal film ply (22) and, laminated onto the said ply, a nonwoven ply (24) saturated with a further liquid reactive resin, where the second flexible lining tube (20) is expanded and the further reactive resin is hardened.

2. Method according to Claim 1,
**characterized in that**
the first flexible lining tube (10) comprises a UV-light-permeable interior flexible film tube (12) onto which the resin-saturated fibre tapes (2) have been wound, the liquid reactive resin is a reactive resin curable via irradiation by light, and that the hardening of the first flexible lining tube (10) is achieved via passing a radiation source (6) through the same.

3. Method according to Claim 2,
**characterized in that**
the photocuring reactive resin comprises photoinitiators which can be activated by UV light, and that the radiation source (6) is a UV radiation source, in particular a radiation source comprising UV-emitting gas-discharge lamps or a radiation source comprising LEDs that emit UV light.

4. Method according to any of the preceding claims,
**characterized in that**
the further reactive resin is a heat-curable reactive resin, preferably a heat-curable epoxy resin, which is applied to the nonwoven ply (24) before the inversion-insertion of the second flexible lining tube (20) into the first flexible lining tube (10).

5. Method according to Claim 4,
**characterized in that**
the hardening of the further reactive resin is achieved and/or accelerated via introduction of a heat source, in particular of a light source emitting infrared radiation, or via introduction of hot gas (28) or of a heated liquid into the expanded second flexible lining tube (20).

6. Method according to any of Claims 1 to 3,
**characterized in that**
the further reactive resin is a reactive resin that can be cured by UV light, preferably an epoxy resin that can be cured by UV light, which is applied to the nonwoven ply (24) before the inversion-insertion of the second flexible lining tube (20) into the first flexible lining tube (10).

7. Method according to any of the preceding claims,
**characterized in that**
the first flexible lining tube (10) comprises an interior flexible film tube (12), onto which the resin-saturated fibre tapes (2) have been overlap-wound, and that, after the hardening of the first flexible lining tube (10), the interior flexible film tube (12) is removed from the first flexible lining tube (10).

8. Method according to Claim 7,
**characterized in that**
the first flexible lining tube (10) is a previously used flexible tube which is arranged in the line (1) and which is permeable to the medium at at least one site and which has been formed from overlap-wound fibre tapes saturated with a curable liquid reactive resin and which has been expanded via introduction of compressed air, and whose reactive resin has been hardened, and that the previously used flexible tube is cleaned and dried on its interior circumferential surface before the second flexible lining tube (20) is drawn in, and that the second flexible lining tube (20) is inversion-inserted into the cleaned and dried previously used tube and is hardened therein in order to seal the leakage site.

9. Arrangement comprising a line requiring renovation, and also comprising a first flexible lining tube (10) which has been formed from overlap-wound fibre tapes (2) saturated with a reactive resin and has been drawn into the line requiring renovation, has been expanded therein by means of compressed air and has been hardened via introduction of heat or light, and also comprising a second flexible lining tube (20) which has been inversion-inserted into the hardened first flexible lining tube (10) and which comprises a circumferentially continuous internal flexible film tube with an interior film ply (22) and with, laminated thereon, a nonwoven ply saturated with a further hardened reactive resin.

10. Arrangement according to Claim 9,
**characterized in that**
the nonwoven ply (24) laminated onto the interior film ply (22) of the second flexible lining tube comprises a polyester nonwoven and/or a glass nonwoven and/or a PE nonwoven and/or a PP nonwoven and/or a Pan nonwoven, or a material of this type.

11. Arrangement according to Claim 9 or 10,
**characterized in that**
the interior film ply of the second flexible lining tube comprises a seamless or overlap-adhesive-bonded PE film and/or a seamless PU film and/or a seamless PA film or a composite film made of PE/PA, which preferably has a wall thickness of more than 1 mm.

12. Line, in particular pressure line, comprising an arrangement according to any of Claims 1 to 11,
**characterized in that**
the reactive resin in the fibre tapes (2) of the first flexible lining tube (10) and the further reactive resin in the nonwoven ply (24) have been hardened.

## Revendications

1. Procédé de réhabilitation d'une conduite (1) acheminant un milieu liquide ou gazeux, selon lequel une première gaine de chemisage (10) formée par des bandes de fibres (2) enroulées en chevauchement, imprégnées d'une résine réactive liquide durcissable, est insérée dans la conduite (1), la gaine de chemisage (10) est dilatée par l'introduction d'air comprimé, et la résine réactive est durcie,
**caractérisé en ce que**
après le durcissement de la résine réactive, une deuxième gaine de chemisage (20) est introduite dans la première gaine de chemisage durcie (10) par retournement, laquelle deuxième gaine de chemisage (20) comprend une couche intérieure de film (22) circonférentiellement fermée et une couche de non-tissé (24) contrecollée sur celle-ci, qui est imprégnée d'une autre résine réactive liquide, la deuxième gaine de chemisage (20) étant dilatée et l'autre résine réactive étant durcie.

2. Procédé selon la revendication 1,
**caractérisé en ce que**
la première gaine de chemisage (10) comprend une gaine intérieure de film (12) perméable à la lumière UV, sur laquelle les bandes de fibres imprégnées de résine (2) sont enroulées, la résine réactive liquide est une résine réactive durcissable par irradiation de lumière, et **en ce que** le durcissement de la première gaine de chemisage (10) a lieu par passage d'une source de rayonnement (6) à travers celle-ci.

3. Procédé selon la revendication 2,
**caractérisé en ce que**
la résine réactive durcissant à la lumière contient des photoinitiateurs, qui sont activables par de la lumière UV, et **en ce que** la source de rayonnement (6) est une source de rayonnement UV, notamment une source de rayonnement contenant des lampes à vapeur UV ou une source de rayonnement comprenant des LED émettant de la lumière UV.

4. Procédé selon l'une quelconque des revendications précédentes,
**caractérisé en ce que**
l'autre résine réactive est une résine réactive durcissable par de la chaleur, de préférence une résine époxyde durcissable par de la chaleur, qui est appliquée avant le retournement de la deuxième gaine de chemisage (20) dans la première gaine de chemisage (10) sur la couche de non-tissé (24).

5. Procédé selon la revendication 4,
**caractérisé en ce que**
le durcissement de l'autre résine réactive a lieu et/ou est accéléré par l'introduction d'une source de chaleur, notamment d'une source de lumière émettant un rayonnement infrarouge, ou par introduction de gaz chaud (28) ou d'un liquide chauffé dans la deuxième gaine de chemisage dilatée (20).

6. Procédé selon l'une quelconque des revendications 1 à 3,
**caractérisé en ce que**
l'autre résine réactive est une résine réactive durcissable par de la lumière UV, de préférence une résine époxyde durcissable par de la lumière UV, qui est appliquée avant le retournement de la deuxième gaine de chemisage (20) dans la première gaine de chemisage (10) sur la couche de non-tissé (24).

7. Procédé selon l'une quelconque des revendications précédentes,
**caractérisé en ce que**
la première gaine de chemisage (10) comprend une gaine intérieure de film (12), sur laquelle les bandes de fibres imprégnées de résine (2) sont enroulées en chevauchement, et **en ce que** la gaine intérieure de film (12) est éliminée de la première gaine de chemisage (10) après le durcissement de la première gaine de chemisage (10).

8. Procédé selon la revendication 7,
**caractérisé en ce que**
la première gaine de chemisage (10) est une ancienne gaine agencée dans la conduite (1), perméable pour le milieu à au moins une position, qui est formée par des bandes de fibres (2) enroulées en chevauchement, imprégnées d'une résine réactive liquide durcissable, et qui est dilatée par introduction d'air comprimé et dont la résine réactive est durcie, et **en ce que** l'ancienne gaine est nettoyée et séchée sur sa surface circonférentielle intérieure avant l'insertion de la deuxième gaine de chemisage (20), et **en ce que** la deuxième gaine de chemisage (20) est retournée dans l'ancienne gaine nettoyée et séchée, et durcie dans celle-ci pour l'étanchéification de la position non étanche.

9. Agencement comprenant une conduite à réhabiliter, ainsi qu'une première gaine de chemisage (10) formée par des bandes de fibres (2) enroulées en chevauchement, imprégnées d'une résine réactive, insérée dans la conduite à réhabiliter, dilatée dans celle-ci au moyen d'air comprimé et durcie par introduction de chaleur ou de lumière, ainsi qu'une deuxième gaine de chemisage (20) retournée dans la première gaine de chemisage durcie (10), qui comprend une gaine intérieure de film circonférentiellement fermée munie d'une couche intérieure de film (22) et d'une couche de non-tissé contrecollée sur celle-ci, imprégnée d'une autre résine réactive durcie.

10. Agencement selon la revendication 9,
**caractérisé en ce que**
la couche de non-tissé (24) contrecollée sur la couche intérieure de film (22) de la deuxième gaine de chemisage est un non-tissé de polyester et/ou un non-tissé de verre et/ou un non-tissé de PE et/ou un non-tissé de PP et/ou un non tissé de Pan, ou contient un tel non-tissé.

11. Agencement selon la revendication 9 ou 10,
**caractérisé en ce que**
la couche intérieure de film de la deuxième gaine de chemisage est un film de PE sans joint ou collé en chevauchement et/ou un film de PU sans joint et/ou un film de PA sans joint ou un film composite de PE/PA, qui présente de préférence une épaisseur de paroi de plus de 1 mm.

12. Conduite, notamment conduite sous pression, contenant un agencement selon l'une quelconque des revendications 1 à11,
**caractérisée en ce que**
la résine réactive dans les bandes de fibres (2) de la première gaine de chemisage (10) et l'autre résine réactive dans la couche de non-tissé (24) sont durcies.
